# EUROPEAN PATENT SPECIFICATION

(11) **EP 3 741 493 B1**
(45) Date of publication and mention of the grant of the patent: **24.06.2026**
(21) Application number: 19912745.7
(22) Date of filing: 30.01.2019
(51) Int. Cl.: B23K 26/00, B23K 26/06, B23K 26/38, B23K 26/064, B23K 103/00, C03B 33/02, C03B 33/10, B23K 26/402

(54) **LASER CUTTING HEAD FOR CUTTING HARD, BRITTLE PRODUCT AND LASER CUTTING DEVICE**
LASERSCHNEIDKOPF ZUM SCHNEIDEN VON HARTEM, SPRÖDEM PRODUKT UND LASERSCHNEIDVORRICHTUNG
TÊTE DE COUPE AU LASER PERMETTANT DE COUPER UN PRODUIT DUR MAIS CASSANT ET DISPOSITIF DE COUPE AU LASER

(43) Date of publication of application: 25.11.2020
(73) Proprietor: Han's Laser Technology Industry Group Co., Ltd., Shenzhen, Guangdong 518000 (CN)
(72) Inventor: ZHANG, Xiaojun, Shenzhen, Guangdong 518000 (CN); YUAN, Xuerui, Shenzhen, Guangdong 518000 (CN); YU, Pingping, Shenzhen, Guangdong 518000 (CN); LU, Jiangang, Shenzhen, Guangdong 518000 (CN); YIN, Jiangang, Shenzhen, Guangdong 518000 (CN); GAO, Yunfeng, Shenzhen, Guangdong 518000 (CN)
(74) Representative: Mirlach, Xiaolu
(86) International application number: PCT/CN2019/074007
(87) International publication number: WO 2020/154985

(56) References cited:
- CN-A- 102 642 092
- CN-A- 102 642 092
- CN-A- 103 091 859
- CN-A- 103 091 859
- CN-A- 108 363 215
- CN-A- 108 515 273
- DE-A1- 102012 208 527
- JP-A- 2010 188 370
- US-A1- 2015 260 985
- US-A1- 2017 259 375

## Description

The present disclosure relates to a laser cutting field, and in particular to a laser cutting head for cutting hard, brittle products and a laser cutting device for cutting hard, brittle products.

### BACKGROUND

With continuous development of the electronic industry, most panel materials used for electronic products are made of transparent, brittle materials such as glass, ceramics, etc. The brittle material of some parts are thick while others are thin, which requires a proper and controllable processing method to be processed.

At present, cutting modes of hard, brittle materials, such as glass and so on, are mainly a knife wheel cutting mode and a laser cutting mode. As for the knife wheel cutting mode, process effect and yield of the knife wheel cutting mode is relatively stable, but efficiency of this mechanical processing mode needs to be improved. As for the laser cutting mode, the laser cutting mode has a larger potential, and a laser device finally achieves a target light spot effect by combining external optical elements. However, due to optical properties of an optical system itself, spot size and a focal depth range in a focused light spot area of a processed material are limited by diffraction limit and optical aberration. So that an ideal cutting effect of cutting thick materials, especially transparent brittle materials, is hard to achieve using common optical path elements. For example, an axis prism is a common element for generating Bezier light beams; however, processing precision of the axis prism and assembly precision of the axis prism are highly sensitive to light spot influence, and distribution of peak power density of energy inside the focal depth in the beam focusing area is not uniform. CN 102642092 A discloses a laser beam based micropore machining device and method. US 2017/0259375 A1 discloses an optical system for shaping a laser beam, which includes a beam shaping element configured to receive the laser beam having a transverse input intensity profile. CN 103091859 A discloses a laser cutting head according to the preamble of claim 1.

### SUMMARY

An object of the present invention is to provide a laser cutting head for cutting hard, brittle products and a laser cutting device for cutting hard, brittle products to solve the above problem that the conventional laser cutting mode for cutting hard, brittle products cannot achieve an ideal effect.

In order to solve the technical problem, the present invention provides a laser cutting head according to claim 1.

Furthermore, a phase difference of two adjacent circular ring structures is π.

Furthermore, numbers of the circular ring structure are disposed as four.

Furthermore, the focusing element is a focusing objective lens.

Furthermore, a Numerical Aperture value of the focusing objective lens ranges from 0.5-1.2.

Furthermore, polarizing direction of the polarizing element is radial.

The present invention further provides a laser cutting device according to claim 8.

Furthermore, the laser cutting device further includes a clamping device. The clamping device clamps hard, brittle products.

Compared with the prior art, an object of the present invention is to design the laser cutting head for hard, brittle products and the laser cutting device for hard, brittle products. The laser light passes through the polarizing element, the binary phase element, and the focusing element in sequence. The laser light is finally converted into the focusing laser light which focal length is long and peak power density change of energy is uniform, where the laser light is ensured to penetrate the hard, brittle products to achieve an ideal effect of cutting hard, brittle products.

### BRIEF DESCRIPTION OF DRAWINGS

The present invention is further described below with reference to the accompanying drawings, where:
FIG. 1 is a schematic diagram of a laser cutting head of the present disclosure.
FIG. 2 is a schematic diagram of a binary phase element of the present disclosure.
FIG. 3 is an effect diagram of a light spot of a focusing laser light of the present disclosure.
FIG. 4 is a coordinate diagram of light spot intensity of the present disclosure.
FIG. 5 is an effect diagram of peak power density of energy of a focusing laser light uniformly changing in a focal depth of the present disclosure.
FIG. 6 is a coordinate diagram of light spot energy density of the present disclosure.
FIG. 7 is an effect diagram of a light spot of a focusing laser light when a laser cutting head punches and cuts of the present disclosure.
FIG. 8 is a flow schematic diagram of light spot distribution of a focusing laser light when a laser cutting head punches and cuts of the present disclosure.

### DETAILED DESCRIPTION

The present disclosure is further described below in detail with reference to the accompanying drawings and embodiments.

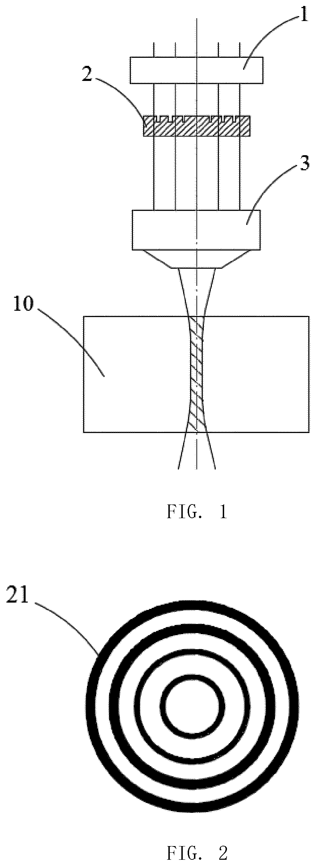

As shown in FIGS. 1-8, the present disclosure provides one embodiment of a laser cutting head for cutting hard, brittle products.

Specifically, referring to FIG. 1, the present disclosure provides the laser cutting head for cutting hard, brittle products 10, where the hard, brittle products 10 are transparent products such as glass or ceramic, etc. The hard, brittle products 10 are usually applied to electronic products. The laser cutting head includes a polarizing element 1, a binary phase element 2, and a focusing element 3. The polarizing element 1, the binary phase element 2 and the focusing element 3 are disposed in sequence. As shown in FIG. 1, the polarizing element 1, the binary phase element 2 and the focusing element 3 are sequentially disposed from top to bottom. The hard, brittle products are disposed below the focusing element 3. The laser cutting head further includes a housing. The polarizing element 1, the binary phase element 2 and the focusing element 3 are all disposed inside the housing and are disposed at a certain distance. The focusing element is disposed on a head end of the housing. And the housing protects the polarizing element 1, the binary phase element 2 and the focusing element 3 from damage. An external laser light is emitted to the polarizing element 1, and polarizing direction of the polarizing element 1 is radial. Due to the fact that spreading direction of the laser light is different from the polarizing direction of the polarizing element 1, so that a polarizing laser light is formed in a location of the polarizing element 1. And then the polarizing laser light is emitted to the binary phase element 2. The binary phase element 2 performs corresponding modulation on a phase of the polarizing laser light. A diffractive laser light is formed in a location of the binary phase element 2. The diffractive laser light is emitted to the focusing element 3, and a focusing laser light for cutting hard, brittle products 10 is formed in a location of the focusing element 3.

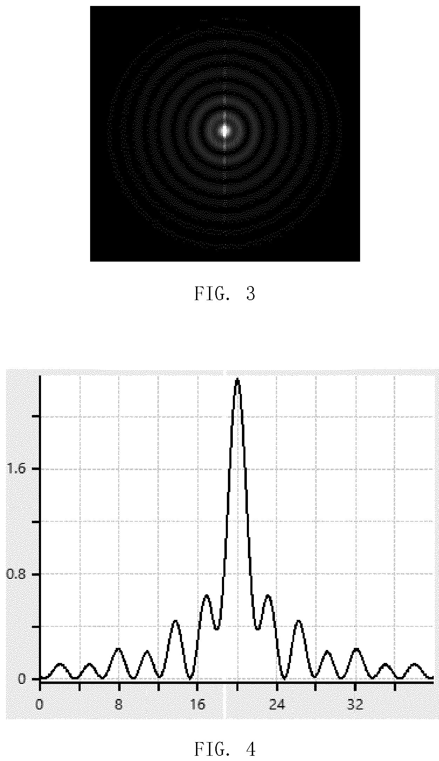

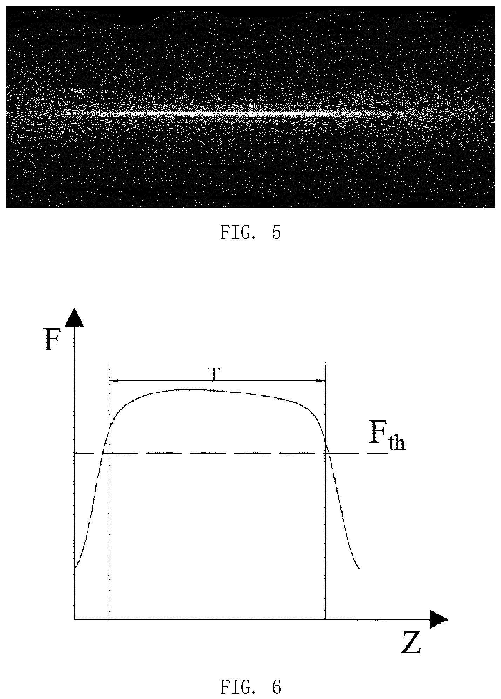

Referring to FIG. 3, a light spot of the focusing laser light is very small, so that a smaller heat affected area is formed in a surface and an interior of the hard, brittle products 10. A simulation result is shown in FIG. 4, where the X-axis is a transverse coordinate of the light spot and the Y-axis is intensity of the light spot. It is known that the light spot of the focusing laser light is very small. Referring to FIG. 5, peak power density change of energy in whole focal depth is uniform while the long focal depth is namely achieved. That is, the more uniform energy distribution in a focal depth direction is, the more uniform a stress effect inside cutting materials is. Referring to FIG. 6, the X-axis is a coordinate of the focal depth direction, and the Y-axis is intensity of the light spot. It is known that energy distribution of the focusing laser light in the focal depth direction is uniform.

The laser cutting head is low in machining difficulty and capable of ensuring machining precision. Furthermore, due to the fact that a mechanical installation mode is adopted, optical debugging is facilitated. Furthermore, an optical path is compact in structure, machining stability and error caused by machines and machining stability and error caused by spatial dimensions are reduced. Furthermore, the focusing laser light has more uniform energy distribution in the focal depth direction and more uniform stress effect inside cutting materials. So that the focusing laser light penetrates the hard, brittle products 10 to achieve an ideal cutting effect.

Referring FIG. 1 and FIG. 2, the binary phase element 2 is a binary optical element. A theoretical basis of the binary optical element is a diffraction theory of light, which utilizes computer-aided optimization design and manufacture of an ultra-large integrated circuit. The binary optical element is a diffractive optical element modulated by a pure phase. The binary phase element 2 is integrally made of transparent glass. The binary phase element 2 includes a base and a plurality of circular ring structures 21. The circular ring structures 21 are etched on the base and are sequentially disposed from inside to outside. Specifically as shown in FIG. 2, numbers of the circular ring structures 21 are disposed as four, and radiuses of the circular ring structures 21 are different. Furthermore, the circular ring structure 21 with the minimum radius is disposed inside. The circular ring structures are sequentially disposed from inside to outside according to radius size. A phase difference of two adjacent circular ring structures ranges from 0.5π to 2π. The phase difference is a difference of the laser light between different amplitude states. Furthermore, the phase difference of two adjacent circular ring structures is π.

It should be noted that, focusing laser lights having different focal depths are obtained by changing the light spot size of the laser light emitted to the polarizing element 1 and changing parameters of an internal annular structure corresponding to a binary phase plate. Thus, penetrating and cutting of the hard, brittle products with different thicknesses is finally realized, and requirements of cutting process of hard, brittle material parts of different electronic products are satisfied.

Furthermore, the focusing element 3 is a focusing objective lens. The focusing objective lens focuses the diffractive laser light after receiving the diffractive laser light, and emits the diffractive laser light to the hard, brittle products 10. A Numerical Aperture value of the focusing objective lens ranges from 0.5-1.2. The Numerical Aperture value is a numerical aperture, and is a parameter value for measuring a capability of a lens of the focusing objective lens collecting an angle range of the laser light. A formula is as follow: NA=n*sin θ , n is a refractive index of a working medium of the lens, θ is half of a maximum aperture angle when the laser light enters or exits the lens. In one embodiment, the Numerical Aperture value of the focusing objective lens is relatively high, that is, the maximum aperture angle of an emergent laser light of the lens of the focusing objective lens is relatively large. Furthermore, the Numerical Aperture value of the focusing objective lens is 0.8.

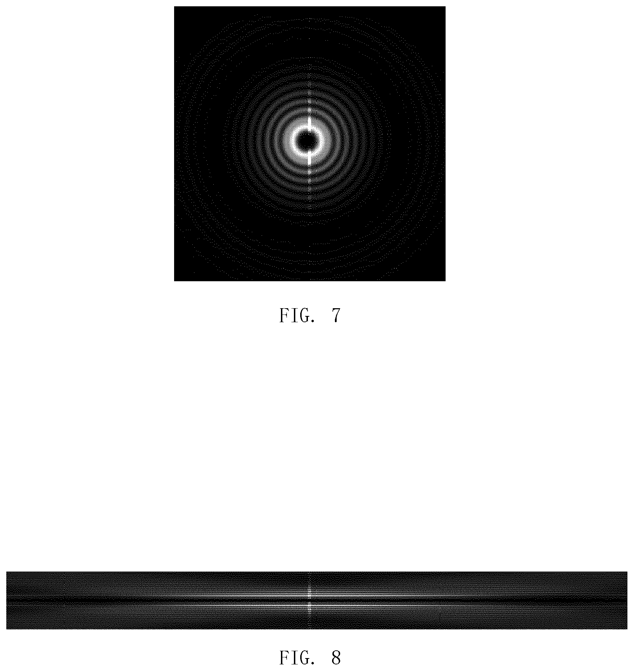

It should be noted that, referring to FIG. 7, circular light spots with different radiuses are obtained by changing a topological charge number of a radial polarizing ,laser light passed through the polarizing element. Referring to FIG. 8, when the long focal depth is obtained, the light spots in the whole focal depths are uniformly distributed so as to realize taper-free punching and cutting of transparent brittle materials.

The present disclosure further provides one embodiment of a laser cutting device.

Specifically, the laser cutting device includes a laser device and the laser cutting head. The laser device emits the laser light to the laser cutting head. The laser cutting head emits the focusing laser light to the hard, brittle products 10, and the focusing laser light performs a cutting operation on the hard, brittle products 10.

Furthermore, the laser cutting device further includes a clamping device. The clamping device clamps the hard, brittle products. When the focusing laser light performs the cutting operation, the clamping device is required to clamp the hard, brittle products 10.

It should be understood that the specific embodiments described herein are only used to explain the present disclosure and are not intended to limit the present invention and equivalent changes or modifications may be made within the scope of the appended claims.

## Claims

1. A laser cutting head for cutting hard and brittle products, comprising:
a polarizing element (1), a binary phase element (2) and a focusing element (3), wherein:
the polarizing element (1), the binary phase element (2) and the focusing element (3) are disposed in sequence;
a laser light passes through the polarizing element (1) to form a polarizing laser light, the polarizing laser light is emitted to the binary phase element (2), a diffractive laser light is formed in a location of the binary phase element (2), and then the diffractive laser light is emitted to the focusing element (3), a focusing laser light for cutting hard and brittle products (10) is formed in a location of the focusing element (3); and
the binary phase element (2) comprises a base and a plurality of circular ring structures (21), and the circular ring structures (21) are etched on the base with a distance between each two adjacent circular ring structures and are sequentially disposed from inside to outside;
**characterized in that**
a phase difference of two adjacent circular ring structures ranges from 0.5π to 2π.

2. The laser cutting head according to claim 1, wherein the phase difference of two adjacent circular ring structures is π.

3. The laser cutting head according to claim 1 or 2, wherein a number of the circular ring structures (21) are four.

4. The laser cutting head according to any one of claims 1-3, wherein the focusing element (3) is a focusing objective lens.

5. The laser cutting head according to claim 4, wherein a Numerical Aperture value of the focusing objective lens ranges from 0.5-1.2.

6. The laser cutting head according to claim 5, wherein the Numerical Aperture value of the focusing objective lens is 0.8.

7. The laser cutting head according to any one of claims 1 to 6, wherein polarizing direction of the polarizing element (1) is radial.

8. A laser cutting device, comprising a laser device and a laser cutting head according to any one of claims 1-7; the laser device emits a laser light to the laser cutting head.

9. The laser cutting device according to claim 8, wherein the laser cutting device further comprises a clamping device, the clamping device clamps hard, brittle products.

## Patentansprüche

1. Laserschneidkopf zum Schneiden harter und spröder Produkte, umfassend:
ein Polarisierelement (1), ein binäres Phasenelement (2) und ein Fokussierelement (3), wobei:
das Polarisierelement (1), das binäre Phasenelement (2) und das Fokussierelement (3) in Sequenz angeordnet sind;
ein Laserlicht durch das Polarisierelement (1) hindurchtritt, um ein polarisierendes Laserlicht zu bilden, wobei das polarisierende Laserlicht an das binäre Phasenelement (2) emittiert wird, wobei ein diffraktives Laserlicht an einer Stelle des binären Phasenelements (2) gebildet wird und dann das diffraktive Laserlicht an das Fokussierelement (3) emittiert wird, wobei ein fokussierendes Laserlicht zum Schneiden von harten und spröden Produkten (10) an einer Stelle des Fokussierelements (3) gebildet wird; und
wobei das binäre Phasenelement (2) eine Basis und eine Vielzahl von Kreisringstrukturen (21) umfasst und wobei die Kreisringstrukturen (21) auf der Basis mit einem Abstand zwischen jeweils zwei benachbarten Kreisringstrukturen geätzt sind und sequentiell von innen nach außen angeordnet sind;
**dadurch gekennzeichnet, dass**
eine Phasendifferenz von zwei benachbarten Kreisringstrukturen im Bereich von 0,5π bis 2π liegt.

2. Laserschneidkopf nach Anspruch 1, wobei die Phasendifferenz von zwei benachbarten Kreisringstrukturen π beträgt.

3. Laserschneidkopf nach Anspruch 1 oder 2, wobei eine Anzahl der Kreisringstrukturen (21) vier beträgt.

4. Laserschneidkopf nach einem der Ansprüche 1 bis 3, wobei das Fokussierelement (3) eine Fokussierobjektivlinse ist.

5. Laserschneidkopf nach Anspruch 4, wobei ein Wert der numerischen Apertur der Fokussierobjektivlinse im Bereich von 0,5-1,2 liegt.

6. Laserschneidkopf nach Anspruch 5, wobei der Wert der numerischen Apertur der Fokussierobjektivlinse 0,8 beträgt.

7. Laserschneidkopf nach einem der Ansprüche 1 bis 6, wobei die Polarisationsrichtung des Polarisierelements (1) radial ist.

8. Laserschneidvorrichtung, umfassend eine Laservorrichtung und einen Laserschneidkopf nach einem der Ansprüche 1 bis 7; wobei die Laservorrichtung ein Laserlicht an den Laserschneidkopf emittiert.

9. Laserschneidvorrichtung nach Anspruch 8, wobei die Laserschneidvorrichtung ferner eine Klemmvorrichtung umfasst, wobei die Klemmvorrichtung harte, spröde Produkte klemmt.

## Revendications

1. Tête de coupe au laser permettant de couper des produits durs et cassants, comprenant :
un élément de polarisation (1), un élément de phase binaire (2) et un élément de focalisation (3),
ledit élément de polarisation (1), ledit élément de phase binaire (2) et ledit élément de focalisation (3) étant disposés en séquence ;
une lumière laser passant à travers l'élément de polarisation (1) pour former une lumière laser polarisante, ladite lumière laser polarisante étant émise vers l'élément de phase binaire (2), une lumière laser diffractive étant formée dans un emplacement de l'élément de phase binaire (2) et ensuite ladite lumière laser diffractive étant émise vers l'élément de focalisation (3), une lumière laser de focalisation permettant de couper des produits durs et cassants (10) étant formée dans un emplacement de l'élément de focalisation (3) ; et
ledit élément de phase binaire (2) comprenant une base et une pluralité de structures en anneau circulaires (21), et lesdites structures en anneau circulaires (21) étant gravées sur ladite base avec une distance entre chacune des deux structures en anneau circulaires adjacentes et étant disposées séquentiellement de l'intérieur vers l'extérieur ;
**caractérisé en ce que**
une différence de phase de deux structures en anneau circulaires adjacentes varie de 0,5 π à 2 π.

2. Tête de coupe au laser selon la revendication 1, ladite différence de phase de deux structures en anneau circulaires adjacentes étant π.

3. Tête de coupe au laser selon la revendication 1 ou 2, un nombre de structures en anneau circulaires (21) étant au nombre de quatre.

4. Tête de coupe au laser selon l'une quelconque des revendications 1 à 3, ledit élément de focalisation (3) étant une lentille d'objectif de focalisation.

5. Tête de coupe au laser selon la revendication 4, une valeur d'ouverture numérique de la lentille d'objectif de focalisation allant de 0,5 à 1,2.

6. Tête de coupe au laser selon la revendication 5, ladite valeur d'ouverture numérique de la lentille d'objectif de focalisation étant 0,8.

7. Tête de coupe au laser selon l'une quelconque des revendications 1 à 6, ladite direction de polarisation de l'élément de polarisation (1) étant radiale.

8. Dispositif de coupe au laser, comprenant un dispositif laser et une tête de coupe au laser selon l'une quelconque des revendications 1 à 7 ; le dispositif laser émet une lumière laser vers la tête de coupe au laser.

9. Dispositif de coupe au laser selon la revendication 8, ledit dispositif de coupe au laser comprenant en outre un dispositif de serrage, le dispositif de serrage serrant des produits durs et cassants.
